# EUROPEAN PATENT APPLICATION

(11) **EP 4 765 593 A1**
(43) Date of publication of application: **24.06.2026**
(21) Application number: 24222563.9
(22) Date of filing: 20.12.2024
(51) Int. Cl.: H02K 5/18, H02K 7/116, H02K 7/14, H02K 7/18, H02K 11/30, H02K 13/00, H02K 16/00, B62J 6/06, B62M 6/60

(54) **DRIVE UNIT FOR A VEHICLE**

(71) Applicant: E2 Drives, 1300 Wavre (BE)
(72) Inventor: VERLE, Aubain Benoît D, 1300 Wavre (BE); CASSART, Matheo Jessica C, 1300 Wavre (BE)
(74) Representative: Calysta NV

(57) **Abstract**

A drive unit comprising: a hub housing at a wheel, a first motor comprising: a first active body configured to generate a first electromagnetic field for generating a relative rotation between the first reactive body and the first active body around a longitudinal axis of the motor; wherein the first active body is arranged radially outward of the first reactive body, the first active body is fixed to the hub housing, wherein the hub housing and the first active body rotate together at a housing rotation speed when the first active body generates the first electromagnetic field.

## Description

The present invention relates to the field of drive units for vehicles, e.g. electrically powered or assisted vehicles, e.g. bicycles.

Drive units of different types are known, for various types of vehicles. Even vehicles that were traditionally only powered by humans, such as bicycles and scooters, are more and more provided with a motor (usually electric) to provide an additional power input.

None of the existing motors is perfectly efficient, and the inefficiency usually results in the generation of heat. Electric motors, comprising a stator and a rotor can generate a lot of heat, especially in the stator, which may comprise several coils with electricity conducting wires which generate heat, especially when not being used in the optimal working points. Also, other components of a drive unit may generate heat.

Excessive heating of the drive unit has several obvious disadvantages. It may cause malfunction, failure of components, and in the example of a bicycle may even result in risk of burning user upon contact. Most drive units, therefore, require active or passive cooling to expel the heat generated within the drive unit.

Different arrangements and techniques are used for providing cooling of a motor. However, the known solutions are often complex and/or space-consuming. Some are also vulnerable to failure.

It is an object of the invention to overcome the disadvantages of the prior art, or at least provide an alternative to the prior art. It is in particular an object of the invention to provide a solution to better expel the heat generated in a motor of a drive unit.

One or more objects are achieved with a drive unit for a vehicle, comprising:
- a hub housing configured to be arranged at a wheel of the vehicle,
- at least a first motor arranged in the hub housing, wherein the first motor comprises:
   ∘ a first active body configured to generate a first electromagnetic field, wherein the first electromagnetic field rotates relative to the first active body; and
   ∘ a first reactive body comprising electromagnetic components configured to cause an electromagnetic torque between the first active body and the first reactive body for generating a relative rotation between the first reactive body and the first active body, when subjected to the first electromagnetic field, said rotation being around a longitudinal axis of the motor;
wherein
- the first active body is arranged radially outward of the first reactive body,
- the first active body is fixed to the hub housing,
- the hub housing and the first active body are configured to rotate together around the longitudinal axis at a housing rotation speed when the first active body generates the first electromagnetic field.

Within the context of this description, different rotations are defined and described. Unless explicitly mentioned otherwise, a rotation (and associated rotation speed) is considered relative to a non-rotating component. The non-rotating component is a reference point that is configured to be stationary relative to the vehicle. The non-rotating component may be a reference point that is part of the vehicle. The non-rotating component may e.g. be a vehicle frame, a sway arm, a swing arm, a vehicle saddle, a non-rotating component of the drive system (e.g. a planet carrier of a second epicyclic gearset). It will be understood that the non-rotating component is usually not purely stationary, as it will be moving together with the vehicle during use.

For example, the rotation of the hub housing and the first active body at the housing rotation speed is considered relative to the non-rotating component. Also, where present, a first rotation speed of the first reactive body is considered relative to the non-rotating component. When a second motor is present, the rotation of the hub housing and the second active body at the housing rotation speed is also considered relative to the non-rotating component. Also, where present, a second rotation speed of the second reactive body is considered relative to the non-rotating component.

The relative rotation between the first active body and the first reactive body can be defined as a first relative rotation. The first relative rotation may e.g. be the control parameter of the first motor. Similarly, when a second motor is present, relative rotation between a second active body and a second reactive body can be defined as a second relative rotation. The second relative rotation may e.g. be the control parameter of the second motor.

The invention thus relates, in embodiments, to a drive unit for a vehicle. A drive unit is configured to transmit power to propel the vehicle. Said power may e.g. be provided by the vehicle drive system, and/or received by the vehicle drive system, e.g. at an input body. The drive unit may e.g. be configured to be functionally connected to one or more wheels of the vehicle for rotating said wheel. The drive unit may comprise at least one motor for providing power, but may also be configured to combine several power inputs. For example, the drive unit may be configured to combine at least one human force input and a power input (or power flux) provided by the at least one motor. Optionally, the drive unit may be configured to combine power fluxes of at least two motors, optionally also with a human force input. A power flux may e.g. be a positive or a negative power input.

The vehicle can e.g. be a bicycle, a tricycle, a quadricycle, a scooter, a segway, a hoverboard, a one-wheeled scooter. The vehicle can e.g. be a micromobility vehicle. The vehicle comprises at least one wheel for propelling the vehicle. The vehicle can comprise more than one wheel, e.g. two, three, four wheels. The vehicle can comprise more than one actively propelled wheel, e.g. two, three, four wheels. The vehicle can e.g. be configured to be propelled by a combination of a human force input and power input provided by at least one motor. The vehicle can e.g. be a (at least partially) human-powered vehicle. The vehicle can e.g. be a (at least partially) muscle powered vehicle. The vehicle can e.g. be an electrically assisted vehicle. The vehicle can e.g. be an electrically powered vehicle. The vehicle is configured to move at least one person and/or cargo.

The vehicle can e.g. be an automotive, a car, a truck, an industrial vehicle, an agricultural vehicle.

The drive unit comprises a housing, which may optionally be a hub housing (however the invention may also be applied to drive units in housings other than a hub housing, in which case the housing may be referred to as housing rather than hub housing). The hub housing is configured to house several components of the drive unit, i.e. said components are arranged inside the hub housing. Nevertheless, it is possible that the drive unit also comprises components outside of the hub housing. The hub housing is configured to be arranged at a wheel hub of the vehicle, e.g. at a driven wheel of the vehicle. The wheel hub is the component connecting the wheel to the rest of the vehicle. The wheel hub is arranged at the center of the wheel and is connected to the wheel rim e.g., by spokes, solid discs, or other means. When the vehicle is a bicycle or tricycle, said wheel may e.g. be a rear wheel. The hub housing may e.g. be the wheel hub. The hub housing may e.g. be configured to be connected to the wheel, e.g. (directly) physically connected. The hub housing may e.g. be configured to rotate together with the wheel. The hub housing may e.g. have a longitudinal axis which coincides with a center axis of the wheel and/or rotation axis of the wheel.

The integration of the drive unit in the wheel hub of a pedal vehicle allows to minimize the distance between pedals, when compared for instance to a system integrated in the middle of the pedal vehicle frame (e.g., near or in the bottom bracket of a bicycle). This reduced distance between pedals allows to improve user comfort (more natural feeling during pedaling).

The housing allows to protect the components arranged therein from damage caused by weather conditions (e.g., exposure to rain and moisture) or occurring during riding or driving (e.g., impact of debris or rocks, splashing of mud or water).

The housing serves as structural part of the vehicle drive system for supporting components of the vehicle drive system, e.g. motor(s), bearings, connectors, shafts, and/or the control unit.

Optionally, the hub housing is made of plastic, aluminum alloy, magnesium alloy, steel, or composite material.

Optionally, the hub housing is substantially symmetrical or rotationally symmetrical (e.g., the hub housing is cylindrical). This symmetry allows to simplify the housing construction. In this context, substantially symmetrical may imply some minor deviations from perfect symmetry, as some elements may be added in specific areas which need not be arranged symmetrically.

The drive unit comprises a first motor which is arranged in the hub housing. The first motor may e.g. be an electro(magnetic) motor, e.g. a (permanent magnet) synchronous motor. The motor can e.g. be a brushed DC motor, a brushless DC motor, a permanent magnet synchronous motor (e.g., an internal permanent magnet motor), a reluctance motor, an externally excited synchronous motor, a stepper motor, an induction motor, an axial flux type motor, a slotless type motors, or any other type of electric motor.

The first motor comprises a first active body and a first reactive body. The first active body generates an electromagnetic field which rotates relative to said first active body. The first active body may thus in some functionalities correspond to what traditionally is called the stator in electric motors; however, as explained in more detail below, the first active body will rotate during use and thus not be stationary in the sense of a traditional stator.

When the first active body is generating the first electromagnetic field, said first electromagnetic field rotates relative to the first active body. The first active body may e.g. comprise one or more iron cores with one or more (electrical) coils (e.g. copper or aluminum) wound around the respective iron core, configured to generate the electromagnetic field, e.g. when current is flowing through them.

The rotating first electromagnetic field exerts an (first) electromagnetic force on the first reactive body, resulting in a (first) torque. This causes a potential acceleration, which may result in a relative rotation between the first reactive body and the first active body, which is also referred to herein as the first relative rotation. Thus, the first relative rotation is considered as a rotation of the first reactive body relative to the first active body, and not relative to the non-rotating component. The torque and the first relative rotation between the first active and reactive body, establishes a power transfer between the first motor and the vehicle system. The first relative rotation (speed) may be the main control parameter of the first motor. The first reactive body may thus in some functionalities correspond to what is traditionally called a rotor. For example, the first electromagnetic field may be substantially stationary (i.e. not rotating) relative to the first reactive body (e.g. in a synchronous motor), or may be rotating relative to the first reactive body e.g. in case of slip in e.g., induction motor. Of course, even when being stationary the first electromagnetic field may still vary over time, e.g. in intensity and/or direction. The first reactive body may e.g. comprise one or more permanent magnets. For example, the first motor may be a permanent magnet synchronous motor.

When the first relative rotation is generated, said relative rotation entails that the first active body is rotating at a different rotation speed than the first reactive body (when seen relative to the non-rotating component). The rotation speed of the first reactive body (relative to the non-rotating component) may be zero or may be different from zero. The first active body, as well as the first reactive body when rotating, rotates around a longitudinal axis of the motor. Said longitudinal axis of the motor may e.g. be a lateral axis of the vehicle, since the hub housing (and motor) is arranged at the wheel of the vehicle. The longitudinal axis of the motor may e.g. be the longitudinal axis of the first active element and/or the first reactive element. The first active element may e.g. have an annular shaped cross-section in a direction perpendicular to the longitudinal axis, wherein the longitudinal axis corresponds to the center axis of the annulus. The second active element may e.g. have a circular or an annular shaped cross-section in a direction perpendicular to the longitudinal axis, wherein the longitudinal axis corresponds to the center axis of the circle or the annulus. Optionally, the longitudinal axis also corresponds to the longitudinal axis of the hub housing.

The rotation of the first active body and/or the first reactive body may e.g. be configured to cause the wheel of the vehicle to rotate. This allows propelling the vehicle. The first active body and/or the first reactive body may thus be configured to be functionally connected to the wheel, e.g. directly, via one or more transmissions, and/or via one or more differential systems, and/or via one or more reductions.

Within this text, reference may be made to a longitudinal axis, a longitudinal direction, a radial direction, a radial axis, a circumferential direction. Unless explicitly mentioned otherwise, these references will be considered from the viewpoint of the first motor. Thus, the longitudinal axis is the longitudinal axis of the motor, and a longitudinal direction is parallel to said longitudinal axis. The longitudinal direction may also be referred to as the axial direction. The radial axis and radial direction are radially outward from said longitudinal axis. For example, the radial axis and radial direction lie in a plane that perpendicularly intersects the longitudinal axis. The circumferential direction may be around said longitudinal axis. For example, the circumferential axis and circumferential direction are tangent to a circle centered on the longitudinal axis.

As mentioned, said longitudinal axis of the motor may be a lateral axis (side-to-side) of the vehicle, and may thus be perpendicular to the longitudinal axis (front-to-back) of the vehicle.

The first active body is arranged radially outward of the first reactive body. Thus, the reactive body is arranged closer to the longitudinal axis than the first active body. Optionally, the first active body encompasses the first reactive body when seen from a radial direction.

The first active body is fixed to the hub housing. That is, the first active body is physically connected to the hub housing. For example, the first active body may be physically attached to the hub housing, e.g. directly or via a frame part for supporting the first active body. Such connection may be made with any suitable method, e.g. being pressed into, circled, crimped, welded, screwed, bolted, glued. Optionally, when an intermediate component such as a frame part is present between the hub housing and the first active body, said intermediate component is preferably made of a material with high thermal conductivity.

The hub housing is configured to rotate around the longitudinal axis at a housing rotation speed when the first electromagnetic field is being generated. The housing rotation speed is considered relative to the non-rotating component, and is different from zero.. Being fixed to said hub housing, the first active body will rotate together with the hub housing, also at said housing rotation speed (relative to the non-rotating component). Although the rotation of the hub housing and the first active body is usually initiated when the first electromagnetic field is generated, it will be understood that the hub housing and first active body may also rotate at moments that the electromagnetic field is zero (thus not actively being generated). It can e.g. occur that the hub housing and first active component keep rotating after the first electromagnetic field has been reduced to zero.

Advantageously, the rotation of the hub housing and the first active body provides cooling of the motor. The first active body is usually the component of the motor with most losses and heat generation, which requires cooling. Since the first active body is radially outward of the first reactive body and fixed to the hub housing, the generated heat can be conducted towards the hub housing. The hub housing is in contact with the outside air, which allows to expel thermal energy. By rotating, the heat transfer to the outside air is further improved.

In these embodiments, the drive unit thus differentiates from conventional systems at least in the fact that the first active body is fixed to the hub housing and rotating together with the hub housing. This results in improved cooling of the motor.

In embodiments, the hub housing is configured to be in contact with the outside air. In this context, outside air is considered as outside of the hub housing, which may e.g. be ambient air. However, when the vehicle is used indoors said outside air can be ambient air inside the building wherein the vehicle is used. In embodiments, the hub housing is made from a thermally conductive material, e.g. aluminum, aluminum alloy, magnesium alloy, copper alloy, steel. In embodiments, the hub housing comprises heat transfer elements, e.g. fins, e.g. protruding at least partially radially outwards from the hub housing. The heat transfer elements may improve the transfer of heat from the hub housing to the outside air.

In embodiments, the first reactive body is configured to rotate around the longitudinal axis of the motor at a first rotation speed when being subjected to the first electromagnetic field, wherein the first rotation speed is different from the housing rotation speed, e.g. in magnitude and/or direction. The first rotation speed is considered relative to the non-rotating component, and is different from zero in these embodiments. Thus, the first active body rotates at the housing rotation speed and the first reactive body rotates at the first rotation speed, wherein both the housing rotation speed and the first rotation speed are considered relative to the non-rotating component. The difference between the first rotation speed and the housing rotation speed, is the first relative rotation speed of the first reactive body relative to the first active body. The first relative rotation speed may be a control parameter of the first motor.

The first reactive body may be configured to rotate in the opposite direction compared to the first active body, when considered relative to the non-rotating component. Optionally, the first rotation speed is equal to the housing rotation speed in magnitude (absolute terms, e.g. expressed as rotations per minute), but opposite in direction.

In embodiments, the first reactive body is configured not to rotate around the longitudinal axis. Thus, the first reactive body is stationary relative to the non-rotating component. That is, rotation speed of the first reactive body around the longitudinal axis of the motor is zero. The first reactive body may e.g. be fixed to a central spindle (or shaft) of the drive unit, which in turn may be configured to be fixed to a frame (part) of the vehicle. It will be understood that stationary in this context relates to a relative movement, since during use vehicle itself may be moving (in a translational direction) as it is being driven, and thereby also move the drive unit and all components in it.

In embodiments, the drive unit is configured to rotate a wheel of the vehicle at a wheel rotation speed, wherein the wheel rotation speed is equal to the housing rotation speed. The wheel rotation speed is considered relative to the non-rotating component. Thus, the wheel rotates at the same speed as the first active body. The first reactive body is not rotating around the longitudinal axis (the reactive body is stationary relative to the non-rotating component, e.g. the vehicle frame). Thus, the (first) relative rotation speed between the first active body and the first reactive body is equal in magnitude to the housing rotation speed, and is equal in magnitude to the wheel rotation speed, but opposite in direction. The first motor is configured to directly drive the wheel. Thus, there is no transmission between the drive unit and the wheel. The drive unit is a direct drive.

In embodiments, the drive unit is configured to rotate a wheel of the vehicle at a wheel rotation speed, wherein the drive unit further comprises a transmission arranged in the hub housing, wherein the transmission is configured to convert the rotation of at least the first reactive body into the rotation of the wheel, wherein the wheel rotation speed is different from the first rotation speed when considered relative to the non-rotating component, and/or different from the first relative speed when considered to the housing rotation speed. Thus, in these embodiments the motor does not drive the wheel directly, but is configured to drive the wheel indirectly. The transmission allows to increase the first relative speed of the first motor and may reduce the torque necessary compared to a direct drive. Optionally, if the drive unit comprises a differential transmission, this may further allow to combine multiple inputs for driving the wheels with variable speed ratio, e.g. for a user when the vehicle is an electrically assisted bicycle.

In embodiments, the drive unit further comprises a central shaft configured to be arranged coaxial with the wheel of the vehicle. For example, a longitudinal axis of the central shaft may coincide with the longitudinal axis of the motor and the central axis of the wheel. The central shaft may also be referred to as the central axle or central spindle, e.g. when embodied as non-rotating.

In embodiments, the central shaft is configured to not rotate around to the longitudinal axis of the motor. Thus, the central shaft, which may also be referred to as central spindle, is stationary relative to the non-rotating component. The rotation speed of the central shaft around the longitudinal axis is zero. The central shaft may e.g. be configured to be connected to a frame of the vehicle. Thus, the central shaft does not rotate. Optionally, the first reactive element is fixed to the central shaft. In these embodiments, the central shaft may also be referred to as the central axle.

In embodiments, the central shaft is configured to rotate around the longitudinal axis of the motor. The central shaft may e.g. be configured to support one or more rotating parts of the motor. Optionally, the first reactive element is fixed to the central shaft.

In embodiments, the drive unit further comprises a second motor arranged in the hub housing, wherein the second motor comprises:
- a second active body configured to generate a second electromagnetic field, wherein the second electromagnetic field rotates relative to the second active body;
- a second reactive body comprising electromagnetic components configured to cause an electromagnetic torque between the second active body and the second reactive body for generating a relative rotation between the second reactive body and the second active body, when subjected to the second electromagnetic field, said rotation being around the longitudinal axis of the motor; and wherein
- the second active body is arranged radially outward of the second reactive body,
- the second active body is fixed to the hub housing,
the second active body is configured to rotate together with the hub housing and the first active body around the longitudinal axis at the housing rotation speed when the first active body generates the first electromagnetic field and/or the second active body generates the second electromagnetic field.

In these embodiments, the drive unit comprises a second motor which is embodied similarly to the first motor. That is, the second motor also comprises an active body and a reactive body, wherein the active body is arranged radially outward of the reactive body. The active body is fixed to the hub housing and rotates together with the hub housing. This achieves the same advantages for cooling the second motor as explained above with regard to the first motor. The second motor may be embodied according to any of the embodiments and/or comprise any of the features described herein for the first motor, even if these are not explicitly mentioned with reference to the second motor. Preferably the first and second motor are embodied as a similar embodiment, although they do not need to be identical. For example, the second motor may be larger or smaller than the first motor.

The relative rotation between the second active body and the second reactive body may be referred to as the second relative rotation and have a second relative rotation speed. The second relative rotation speed may be a control parameter of the second motor.

Optionally, the first and second active body both rotate around the same longitudinal axis. Thus, the first and second motor (and the first and second reactive body) may be coaxial. When rotating, optionally the first and second reactive body also rotate around the same longitudinal axis. The first and second motor may be offset relative to each other when seen in the longitudinal direction.

In embodiments, the second reactive body is configured to rotate around the longitudinal axis of the motor at a second rotation speed when being subjected to the second electromagnetic field, wherein the second rotation speed is different from the housing rotation speed, and wherein optionally the second rotation speed is different from the first rotation speed. The second rotation speed is considered relative to the non-rotating component. The second rotation speed may be different from zero.

In embodiments, the second reactive body is configured not to rotate around the longitudinal axis. That is, the second reactive body remains stationary relative to the non-rotating component. The second reactive body may e.g. be fixed to a central shaft of the drive unit, which in turn may be configured to be fixed to a frame part of the vehicle.

In embodiments, the drive unit comprises an input body configured to rotate at an input speed, wherein the input body is configured to be rotated directly or via one or more transmissions by a human force input, and wherein the drive unit is configured to combine the rotation of the input body and at least the rotation of the first motor to propel the vehicle. In other words, the drive unit is configured to combine the torque of the input body and at least the torque of the first motor to propel the vehicle. The input speed is a rotation considered relative to the non-rotating component)

In these embodiments, the vehicle is thus a (at least partially) human-powered vehicle or a (at least partially) muscle-powered vehicle. The vehicle can e.g. be an electrically assisted vehicle, e.g. a bicycle or scooter. It is noted, however, that even in these embodiments the drive unit may comprise operational modes in which the vehicle can be propelled without a human force input, e.g. in a walk-assist function or a throttle assist function.

A user of the vehicle, being a human, can provide the human force input, e.g. using pedals of the bicycle to rotate a crankshaft. The human force input rotates the input body. One or more transmissions may be arranged between the human force input and the input body of the drive unit. Said transmissions may e.g. include gears to adapt the rotation speed. Said transmissions may e.g. include a flexible transmission element such as a chain, belt, or shaft to convert the movement to the drive unit, e.g. when the input body is arranged in the hub housing at the wheel while the human force input is provided at a distance of the wheel, e.g. at the crankshaft of the bicycle. For example, the input body may be configured to be rotated by an input sprocket, wherein e.g. the input sprocket is configured to be rotated by the flexible transmission element, wherein e.g. the flexible transmission element is configured to be rotated by a crank sprocket, wherein e.g. the crank sprocket is configured to be rotated by a crank shaft, wherein e.g. the crank shaft is configured to be rotated by the pedals. One or more of these components may be part of the drive unit.

The drive unit is configured to combine the human force input (e.g. as a torque) and the input (e.g. as a torque) of the first motor (and optionally the second motor) to propel the vehicle.

In embodiments, the drive unit comprises a continuously variable transmission (CVT) arranged in the hub housing having an adaptable gear ratio between the input speed and a wheel rotation speed. Said gear ratio can e.g. be continuously adapted above a minimal ratio, and/or within a gear ratio range between a minimal ratio and a maximal ratio. The input speed can be the rotation speed of the input body. The input speed is determined by the human force input. In the case of a bicycle, the input speed is determined by the rotation speed at which the user moves the pedals. Thus, the ratio between the human input (e.g. pedal rotation speed) and the wheel rotation speed is continuously adaptable in these embodiments. This provides a pleasant and smooth user experience.

In embodiments, the continuously variable transmission comprises a differential system. The differential system (e.g. at a first connection point) is functionally connected to the input body. The differential system (e.g. at a second connection point) is functionally connected to the first reactive body. The differential system (e.g. at a third connection point) is functionally connected to the hub housing. The differential system is configured such that a rotation speed ratio between the input body and the housing rotation speed is controllable by adapting the first rotation speed. In these embodiments, the first motor can be used for adapting the gear ratio by using the differential system.

In embodiments, the drive unit further comprises a differential system, wherein the first reactive body is functionally connected to the differential system, and optionally comprising a reduction system, wherein the second reactive body is functionally connected to the reduction system.

For example, the differential system (in any of the embodiments described herein) and/or the reduction system (in any of the embodiments described herein) can comprise one or more of the following transmission units: an epicyclic gear/drive unit; an epicyclic gear/drive unit with double planets; a cycloidal drive unit; a harmonic drive unit; a differential system made of the combination of the above-mentioned differential systems. For example, the differential system and/or reduction system may comprise or be a wolfram transmission.

For example, the drive unit may comprise a differential system, wherein the first reactive body is connected to a first connection point, the hub housing is connected to a second connection point, and optionally the input body is connected to a third connection point. The different connection points may e.g. be different gears. A reduction system can e.g. be obtained by locking one of the connection points (e.g. one of the three connection points) of a differential system.

For example, the drive unit may comprise a differential system or a reduction system, wherein the second reactive body is connected to a first connection point, the hub housing is connected to a second connection point. The different connection points may e.g. be different gears.

For example, the drive unit may comprise an epicyclic gearset (e.g. as differential system), wherein the first reactive body is functionally connected to one of the gears (e.g. the sun gear) of the epicyclic gearset, wherein optionally the hub housing is functionally connected to another one of the gears (e.g. the ring gear). Optionally, the input body is connected to yet another one of the gears (e.g. the planet carrier).

Optionally the drive unit further comprises a second epicyclic gearset (e.g. as reduction system), wherein the second reactive body is functionally connected to one of the gears (e.g. the sun gear) of the second epicyclic gearset. Optionally the hub housing is functionally connected to another one of the gears (e.g. the ring gear). Optionally, the planet carrier is configured to be connected to a vehicle frame.

In embodiments, the drive unit comprises a control unit. The control unit may comprise or be a board, e.g. a printed circuit board (PCB). The control unit may be configured to control the first motor. When present, the control unit may also be configured to control the second motor.

Controlling the first and/or second motor may include controlling the respective electromagnetic field that the respective active body is configured to generate, e.g. changing the amplitude, direction and/or speed of rotation of the respective electromagnetic field. As such, the rotation speed of the respective active body, respective reactive body, and eventually the wheel can be controlled. Optionally the control unit is also configured to control a gear ratio between an input body and the wheel rotation speed, e.g. by controlling the first and/or second rotation speed, e.g. by controlling the first and/or second electromagnetic field.

Controlling the first and/or second motor may also include providing electric power (e.g. electric current) to the respective active body. The control unit may functionally be connected to the respective motor to transfer electrical power and/or information.

The control unit may e.g. be configured to control the first and/or second electromagnetic field by electronic commutation. The control unit may e.g. be configured to control one or more switches.

Examples of control strategies for controlling the first electric motor and the second electric motor, and examples to implement a CVT (e.g. using a differential system and/or a reduction system), are known from the following patent applications by the present applicant: US patent applications US 14/397,460, US 15/507,448, US 16/643,088, US 17/634,754, and from the Belgian patent applications BE2023/5641 and BE2024/5329. These applications are incorporated herein by reference in their entirety.

The control unit may e.g. be configured to receive information inputs. The control unit may e.g. be configured to control the first and/or second motor based on the information inputs. An information input may e.g. be generated by a user-controlled element, e.g. a drive unit setting, e.g. at a steering wheel/handlebar of the vehicle; a throttle input, or a brake input. An information input may e.g. be generated by a sensor, e.g. for measuring a position, a speed (e.g. a rotation speed), and/or an acceleration of an element in the kinematic chain, e.g. of a wheel, a crankshaft, an input body, the hub housing, the first reactive body, the second reactive body.

The control unit can e.g. be configured to control the first and/or second motor based on the power input of the user, e.g. based on a torque and/or a pedaling speed provided by the user.

In embodiments, the control unit can be arranged to not rotate around to the longitudinal axis (thus being stationary relative to the non-rotating component). In embodiments, the control unit can be configured to rotate at the housing rotation speed (relative to the non-rotating component), e.g. the control unit can be fixed to the hub housing.

In embodiments, the drive unit further comprises at least one rotating electrical connection to transfer electrical power and/or information between the control unit and a power supply (e.g. a battery, e.g. connected to a frame of the vehicle) and/or information supply (e.g. any of the above mentioned elements for generating an information input) outside of the hub housing. In embodiments, the drive unit further comprises at least one rotating electrical connection to transfer electrical power and/or information between the control unit and the first active body, and optionally the second active body when present.

Optionally, the drive unit comprises at least a first rotating electrical connection to transfer electrical power, and at least a second rotating electrical connection to transfer information. Optionally, the drive unit comprises multiple rotating electrical connections to transfer electrical power. Optionally, the drive unit comprises multiple rotating electrical connections to transfer information.

The control unit may e.g. be arranged outside of the hub housing. Since the first (and second when present) active body is rotating with the hub housing during use, a rotating electrical connection can transfer the power and/or information between the control unit and the first active body (and second active body when present).

The control unit may e.g. be arranged inside the housing, and e.g. configured to rotate with the hub housing. For example, the control unit may be fixed to the hub housing. Since the power supply (e.g. a battery) and some of the information supplies are arranged outside the hub housing and do not rotate together with the hub housing, a rotating electrical connection can transfer the power and/or information between the control unit and said power supply and/or information supply.

In embodiments, the drive unit comprises a control unit arranged in the hub housing, wherein the control unit is configured to control at least the first motor, wherein the control unit is fixed to the hub housing and configured to rotate together with the hub housing and the first active body at the housing rotation speed. Optionally, when the second motor is present, the control unit is also configured to control the second motor.

Having the control unit arranged inside the hub housing may be advantageous to reduce the length of electrical connections between the control unit and the first and/or second motor. Furthermore, it may allow to make the overall system more compact since no additional housing is required for the control unit.

Furthermore, the control unit being fixed to the hub housing (i.e. being physically connected, directly or indirectly) and rotating with the hub housing may be very advantageous to provide cooling of the control unit. The control unit may comprise several heat-generating elements, e.g. electric or electronic elements, e.g. MOSFETs. The fixation of the control unit to the hub housing allows heat to be conducted from the control unit to the hub housing. As the hub housing rotates, this heat can be expelled efficiently to the outside air.

For example, the control unit may be physically attached to the hub housing, e.g. directly or via a frame part for supporting the control unit. Connections may have been made with any suitable method, e.g. being pressed into, circled, crimped, welded, screwed, bolted, glued. Preferably, when an intermediate component such as a frame part is present between the hub housing and the control unit, said intermediate component is made of a material with high thermal conductivity.

Optionally, the drive unit comprises a control unit holder, wherein the control unit is physically attached to the control unit holder, and wherein the control unit holder is physically attached to the hub housing. Preferably, the control unit holder is made of a material with high thermal conductivity, e.g. aluminum alloy, magnesium alloy, copper alloy, steel.

Optionally, the control unit (e.g. the board) has an annular shape, e.g. having the longitudinal axis of the motor as center axis. The central opening of the annular shape may e.g. be around a central shaft extending through the hub housing.

Optionally, the control unit is arranged between the first and second motor when seen in the longitudinal direction.

Optionally, the control unit comprises a single board configured to control both the first and second motor.

In embodiments, the drive unit may comprise a rotating cable configured to provide electrical power and/or information to the control unit (e.g. for controlling at least the first motor), wherein the rotating cable is arranged in the hub housing and configured to rotate together with the first active body and the hub housing at the housing rotation speed, and the rotating electrical connection is configured to electrically connect the rotating cable to a non-rotating cable, wherein the non-rotating cable is e.g. connected to a battery outside of the hub-housing. The battery may e.g. be arranged on or in the frame of the vehicle.

In embodiments, the drive unit may comprise a rotating electrical connection configured to provide electrical power from the control unit (e.g. when the control unit is not rotating with the hub housing) to the first active body of the first motor, and optionally a further rotating electrical connection configured to provide electrical power from the control unit to the second active body of the second motor.

The rotating electrical connection for transferring electrical power (in any of the embodiments/locations mentioned above), may (in any of the embodiments described herein having such rotating electrical connection) e.g. comprise one or more of the following: a rotating contact with brushes; a contactless rotary transformer; a current transmitting bearing; a current transmitting brush.

The rotating electrical connection for transferring electrical information, may (in any of the embodiments described herein having such rotating electrical connection) e.g. comprise one or more of the following: a rotating contact with brushes; a contactless rotary transformer; a current transmitting bearing; a current transmitting brush; a modulation of another electrical current, e.g. the electrical power transmission; a radio frequency transmission; an optic transmission.

The drive unit may comprise multiple (rotating) electrical connections, e.g. for making different power and/or information connections, e.g. between the control unit in the hub housing and other control components; and/ between the control unit in the hub housing and a power supply; and/or between the control unit and the first and second motor, respectively.

In embodiments wherein the control unit rotates together with the hub housing, the drive unit may comprise at least one sensor arranged on the control unit for measuring the housing rotation speed. Said at least one sensor may e.g. be an inertial measurement unit (IMU) sensor. Advantageously, arranging the sensor on the control unit allows to omit electrical connection that would otherwise be required to connect the sensor to the control unit. At the same time, the measurement of the housing rotation speed (and the wheel rotation speed) can be accurate since the control unit also rotates at said housing rotation speed.

In embodiments, the first electromagnetic field is configured to generate a first rotation torque exerted onto the first reactive body, wherein the first active body is subjected to said first rotation torque in opposite direction (by law of action-reaction), wherein the first active body and the hub housing are configured to be rotated by said first rotation torque in opposite direction.

In embodiments, the drive unit further comprises a first freewheel and/or a first clutch, wherein the first freewheel and/or the first clutch is functionally connected to an input body (e.g. at a first connection point) and to the hub housing (e.g. at a second connection point), and configured to ensure that the housing rotation speed is equal or larger than an input body rotation speed. This first freewheel and/or first clutch is e.g. configured to ensure a minimum gear ratio of the drive unit.

For example, the freewheel may be functionally connected to one of the gears of the first and/or second epicyclic gearset e.g. the freewheel may be arranged between the first planet carrier and/or the second planet carrier and the hub housing in the radial direction, or between the first ring gear and the hub housing, or between the second ring gear and the hub housing, or between any two of the gears (e.g. two among : the sun gear, the planet gear, the planet carrier, the ring gear) of the first epicyclic gearset or of the second epicyclic gearset. For example, the freewheel may be arranged between a shaft of the first motor or second motor and a stationary shaft of the drive unit. The arrangement of the freewheel may be selected based on a target minimum gear ratio.

In embodiments, the first and/or second reactive body comprise one or more permanent magnets, and the first and/or second active body comprise one or more iron cores with copper or aluminum coil wound around the respective iron (or iron alloy) core, wherein the copper or aluminum coil is configured to guide electric current. For example, the first motor and/or the second motor may be a permanent magnet synchronous motor.

In embodiments, the control unit is configured to control the first and/or second motor, e.g. by controlling the first electromagnetic field generated by the first active body and/or controlling the second electromagnetic field generated by the second active body. The control unit may e.g. control the first and/or second electromagnetic field by controlling the current provided to the first and/or second active body, respectively. The control unit may be configured to control the respective torque by controlling the respective electromagnetic field. As such, the control unit may be configured to control the rotation of the hub housing, and the wheel rotation speed. The control unit may also be able to control the gear ratio of the transmissions by controlling the first (relative) rotation speed and/or the second) relative) rotation speed by controlling the first and/or second electromagnetic field, respectively. The control unit may also be able to control an assistance level by controlling the first rotation speed and/or the second rotation speed by controlling the first and/or second electromagnetic field, respectively. In embodiments, the vehicle is a bicycle comprising pedals and a crankshaft connected thereto, configured to receive a human force input. The drive unit may e.g. be configured to combine the human force input and the input(s) of the first and/or second motor to propel the bicycle. The hub housing may e.g. be configured to be arranged at the rear wheel of the vehicle.

In embodiments, the invention may e.g. relate to a vehicle, e.g. a bicycle, comprising a drive unit according to any of the embodiments described herein, wherein the hub housing is arranged at one of the wheels of the vehicle.

In embodiments and/or some modes of working, the ratio (e.g. of respective rotation speeds relative to the non-rotating body) between the input body and the output body and/or wheel is continuously adapted. For example, the control unit may be configured to control the gear ratio accordingly. The objective could be to maintain reference pedaling speed.

In embodiments and/or some modes of working, the ratio (e.g. of respective rotation speeds relative to the non-rotating body) between the input body and the output body is selectable by the user or by software (e.g. a control unit) amongst a set of (discrete) predefined ratio values. For example, the control unit may be configured to control the gear ratio accordingly. In this case, the stepped ratio changes are emulated as the selected ratio values are virtual gear ratios.

In embodiments and/or some modes of working, the ratio (e.g. of respective rotation speeds relative to the non-rotating body - e.g. between the input body and the output body) is continuously the minimum ratio. For example, the control unit may be configured to control the gear ratio accordingly. This may e.g. be advantageous for climbing steep hills.

In embodiments and/or some modes of working, the control unit is configured to determine and/or control a torque of the second motor torque in order to maintain a predefined level of assistance (ratio between input power and output power).

In embodiments and/or some modes of working, the drive unit is configured to apply a torque at the output body even if essentially no power is received at the input body from the user. This may e.g. allow the user to move the vehicle with little effort, e.g. when walking with a bicycle.

In embodiments and/or some modes of working, the drive unit is configured to apply a negative (braking) torque at the output body. In this case, the drive unit is configured to absorb kinematic energy. The drive unit may e.g. be configured to provide the recovered energy to a battery, e.g. for storing said recovered energy.

The output body in the embodiments above, may e.g. correspond to the hub housing and/or to a gear of the transmissions that is (directly or indirectly) connected to the hub housing.

The invention further relates to a method for cooling and/or a method for controlling a drive unit. Although the method can be performed using the drive unit according to the invention; neither the drive unit, nor the method is limited thereto. Features explained herein with reference to the drive unit have the same meaning with respect to the method unless explicitly defined otherwise. Features explained with reference to the drive unit can be applied mutatis mutandis to the method to achieve the similar advantages, and vice versa.

One or more objects of the invention can be achieved with a method for cooling at least a first motor, comprising a step of using a drive unit according to any of the embodiments described herein, e.g. for rotating the first active body and the hub housing at the housing rotation speed.

One or more objects of the invention can be achieved with a method for controlling a drive unit, comprising a step of using a drive unit according to any of the embodiments described herein, e.g. for rotating the first active body and the hub housing at the housing rotation speed.

One or more objects of the invention can be achieved with a method for cooling at least a first motor of a drive unit (e.g. according to any of the embodiments described herein) for a vehicle, and/or a method for controlling a drive unit (e.g. according to any of the embodiments described herein) for a vehicle, wherein the first motor is arranged in a hub housing arranged at a wheel of the vehicle, wherein the first motor comprises a first active body and a first reactive body, wherein the first active body is arranged radially outward of the first reactive body and is fixed to the hub housing;
wherein the method comprises the following steps:
- generating a first electromagnetic field with the first active body, wherein the first electromagnetic field rotates relative to the first active body, wherein the first electromagnetic field causes a relative rotation between the first reactive body and the first active body, said rotation being around a longitudinal axis of the motor;
- rotating the hub housing and the first active body together around the longitudinal axis at a housing rotation speed.

Exemplary embodiments of the invention are described using the figures. It is to be understood that these figures merely serve as examples of how the invention can be implemented and are in no way intended to be construed as limiting for the scope of the invention and the claims. Like features are indicated by like reference numerals along the figures. In the figures:
Fig 1 a: schematically illustrates a vehicle, which in this example is a bicycle;
Fig. 1b: schematically illustrates how the bicycle is propelled;
Fig. 2: schematically illustrates a cross-section of a drive unit;
Fig. 3a-3c: schematically illustrate cross-sections of different embodiments of a drive unit.

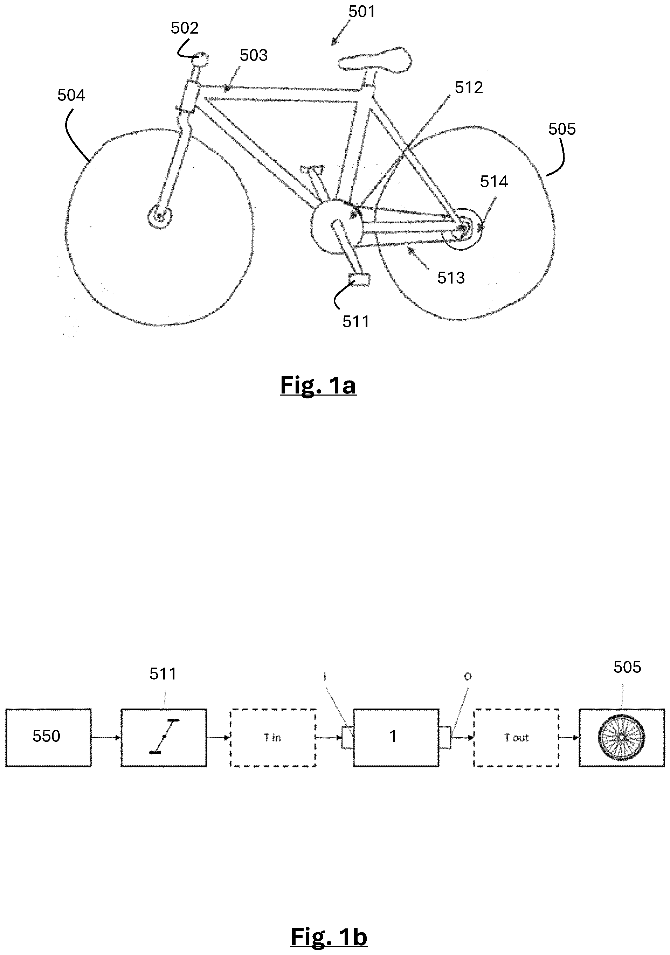

Fig. 1 schematically illustrates a vehicle 501, which in this example is a bicycle 501. The bicycle 501 has a handlebar 502, a frame 503, a front wheel 504, and a rear wheel 505. As schematically illustrated in fig. 1B as well, a user 550 of the bicycle 501 can move the pedals 511 using the feet, which will rotate a crankshaft 512 to set a chain 513 in motion. The chain 513 is functionally connected to a drive unit 1 at a hub 514 of the rear wheel 505 and provides an input torque Tin to the drive unit 1. The drive unit 1 converts the input torque Tin into an output torque Tout. The drive unit 1 comprises an additional torque input, in this example in the form of two electric motors. The torque inputs are combined into the output torque Tout, which in turn is converted into the motion of the rear wheel 505 to propel the bicycle 501. The drive unit 1 is arranged at the rear hub 514 of the bicycle 501.

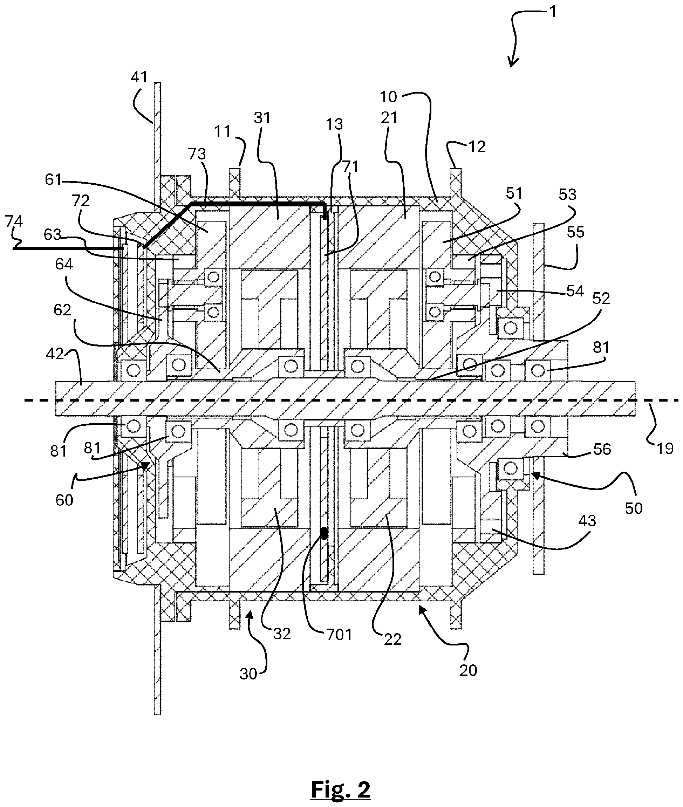

Fig. 2 schematically illustrates an example of how the drive unit 1 can be implemented. Fig. 2 schematically illustrates the drive unit 1 in cross-section, showing a longitudinal axis 19 of the drive unit 1. The longitudinal axis 19 of the drive unit extends in a lateral direction of the bicycle, and thus perpendicular to the longitudinal axis of the bicycle. Optionally, the longitudinal axis 19 coincides with a rotation axis, e.g. a central axis, of the rear wheel.

The drive unit 1 comprises a hub housing 10, which forms the hub of the rear wheel of the bicycle. The longitudinal axis 19 of the drive unit corresponds with the longitudinal axis 19 of the hub housing. The drive unit 1 comprises at least a first motor 20, and in the shown example also a second motor 30. The first and second motor 20, 30 are both arranged inside the hub housing 10. The first motor 30 comprises a first active body 21, and a first reactive body 22. The second motor comprises a second active body 31, and a second reactive body 32.

Within this context, it is considered that an (electromagnetic) motor 20, 30 comprises an active body 21, 31 and a reactive body 22, 32. The active body 21, 31 generates an electromagnetic field that causes electromagnetic torque between the respective reactive body 22, 32 and active body 21, 31. Said torque may generate an acceleration, which can result in relative rotation between the respective reactive body 22, 32 and active body 21, 31 The electromagnetic field rotates relative to the active body 21, 31, but is substantially stationary relative to the reactive body 22, 32. The active body 21, 31 may e.g. comprise one or more iron (or iron alloy) cores with copper coil wound around the respective iron core. When electric current flows through the wire of the coil, an electromagnetic field is generated. This field may exert an electromagnetic force onto the reactive body 22, 32. The reactive body 22, 32 may e.g. comprise one or more permanent magnets which are susceptible to the electromagnetic field. This causes a torque which is capable of causing relative rotation between active body 21, 31 and the reactive body 22, 32, respectively. In a traditional motor, the active body 21, 31 may be referred to as "stator", and the reactive body 22, 32 as "rotor".

In the shown example, the first and second motor 20, 30 are coaxial, both having the longitudinal axis 19 as longitudinal axis 19. The relative rotation between one of the active bodies 21, 31 and the respective reactive body 22, 32 is around said longitudinal axis. Furthermore, the active bodies 21, 31 and reactive bodies 22, 32 each have substantially the shape of an annular cylinder (thus having an annular cross section), wherein the active body 21, 31 of each motor 20, 30 is arranged radially outward of the respect reactive body 22, 32.

During use, the hub housing 10 is configured to rotate around the longitudinal axis 19 at a housing rotation speed relative to a non-rotating component. The non-rotating component can e.g. be the frame of the vehicle, or a sway arm of the vehicle. The active bodies 21, 31 are each fixed to the hub housing 10. That is, the active bodies 21, 31 are physically connected to the hub housing 10. The active bodies 21, 31 also rotate at the housing rotation speed during use, and are able to conduct heat to the hub housing 10 through the physical connection. The rotation of the hub housing 10 improves the transfer of thermal energy from the hub housing 10 to the outside air. In addition, the physical connection between the active bodies 21, 31 and the hub housing 10 improves the transfer of thermal energy from said active bodies 21, 31 to the hub housing 10, and subsequently to the outside air. Advantageously, the active body 21, 31 of each motor is cooled efficiently, which is usually the component generating the most heat during use.

Fig. 2 illustrates a first protrusion 11 and a second protrusion 12 extending radially outward from the hub housing 10. The first and second protrusion 11, 12 form a spoke terminal interface, which can be used for connecting the wheel to the hub housing 10. Although not shown in this example, it is envisaged that the hub housing 10 may be provided with elements for improving the heat transfer to the outside air. Such elements can e.g. include cooling fins protruding from the hub housing 10, e.g. (at least partially) radially outward.

In some embodiments, the reactive bodies 22, 32 remain stationary relative to the non-rotating component, and do not rotate around the longitudinal axis 19 (when seen relative to the non-rotating component). For example, the reactive bodies 22, 32 can be fixed to a central shaft 42 which remains stationary (when seen relative to the non-rotating component). In the shown example, however, the reactive bodies 22, 32 rotate on the central shaft 42 around the longitudinal axis 19 during use, at a first and second rotation speed, respectively. The first and second rotation speeds are different from the housing rotation speed.

The drive unit 1 comprises a transmission system which is configured to combine torque of the first motor 20 and torque of the second motor 30 to rotate the wheel of the vehicle to propel the vehicle. In addition, the transmission system receives a human force input and uses this as well for propelling the vehicle. It may in particular be advantageous to use the first and second motor 20, 30 to implement a continuously variable transmission. The continuously variable transmission has an adaptable gear ratio between an input speed provided by the human force input and a wheel rotation speed. In the shown example, the continuously variable transmission comprises a differential system implemented as a first epicyclic gear system 50, and a reduction system implemented as a second epicyclic gear system 60. However, different types of gear systems can be used for the differential system and the reduction system, and the differential system and reduction system do not need to be implemented as the same type of gear system.

The first and second epicyclic gear system 50, 60 are arranged coaxial with each other, both having the longitudinal axis 19 as the common center axis. The first and second epicyclic gear system 50, 60 each comprise a respective sun gear 52, 62, a respective ring gear 53, 63, respective planet gears 51, 61, and a respective planet carrier 54, 64.

The transmission system comprises an input body 56, which is connected to an input sprocket 55. The input sprocket 55 comprises gear teeth (not shown) on which a flexible transmission element (not shown) such as a chain or belt, and/or shaft is arranged. The flexible transmission is e.g. an endless chain or belt which is also arranged on a crank sprocket at the crankshaft of the bicycle. When a user of the bicycle moves the pedals and thereby the crank, the crank sprocket will rotate. This in turn causes the chain or belt to move, and thereby rotate the input sprocket 55 and consequently the input body 56. The input body 56 rotates at an input speed (relative to the non-rotating component) around the longitudinal axis 19. It will be understood that other implementations for rotating the input body 56 are possible, in particular when the drive unit 1 is used for a vehicle other than a bicycle.

The input body 56 is connected to the planet carrier 54 of the first epicyclic gear system 50, such that rotation of the input body 56 causes the planet carrier 54 to rotate at the input speed as well. The rotation of the planet carrier 54 causes the planet gears 51 of the first epicyclic gear system 50 to rotate as well.

The sun gear 52 of the first epicyclic gear system 50 is connected to the first reactive body 22 of the first motor 20. When the first active body 21 generates the first electromagnetic field, an electromagnetic force is exerted onto the first reactive body 22. This causes a torque which in turn can cause the first reactive body 22 to rotate at the first rotation speed, and as such also the sun gear 52. These rotations are considered relative to the non-rotating component.

The ring gear 51 of the first epicyclic gear system 50 is connected to the hub housing 10. The rotation of the ring gear 53 thus causes the hub housing 10 to rotate (at the housing rotation speed), and as such the wheel. In the shown arrangement, the housing rotation speed corresponds to the wheel rotation speed. In other embodiments, it may be possible that the ring gear 51 could be connected to the hub housing 10 via a one-way-clutch, e.g. integrated in a way that the hub housing 10 cannot rotate the ring gear 51 when the bike is moving forward.

The ratio between the input speed and the housing rotation speed (and thus wheel rotation speed) can be controlled by adapting the first rotation speed, which in turn can be controlled by adapting the electromagnetic field generated by the first active body 21.

In the second epicyclic gear system 60, the ring gear 63 is also connected to the hub housing 10, and thus rotating at the housing speed. The sun gear 62 is connected to the second reactive body 32 of the second motor 30. The second electromagnetic force generated by the second active body 31 on the second reactive body 32 is capable of rotating the second reactive body 32 at the second rotation speed. As such, the second electromagnetic force also affects the housing rotation speed (and thus wheel rotation speed). The planet carrier 64 can be fixed to the shaft 42 through a spline connection or equivalent non-moving connection.

Fig. 2 further illustrates a brake disc 41 which is arranged outside of the hub housing 10 but attached to the hub housing 10. The brake disc 41 will thus rotate at the hub housing speed (relative to the non-rotating component). The vehicle comprises a brake system that can be applied by the user, which will engage the brake disc 41 to slow down the vehicle by reducing the housing rotation speed (and thus wheel rotation speed).

Fig. 2 furthermore illustrates a freewheel 43, arranged between the planet carrier 54 of the first epicyclic gear system 50 and the hub housing 10. The freewheel 43 allows decoupling of the input body 56 and the hub housing 10 (and thus the wheel). This ensures that the wheel can rotate without rotation of the input body 56, and thus without rotation of the pedals of the bicycle. In addition, the freewheel 43 ensures the housing rotation speed is equal or larger than the input speed at which the input body 56 rotates. In particular, the housing rotation speed is equal or bigger than the rotation speed of planet carrier 54 when the bike is propelled in the forward direction. The freewheel ensures a mechanical minimum gear ratio, which can be useful at the starting phase, on a steep hill, or in case of an electric failure (e.g. to enable pedaling the bike back ²home).

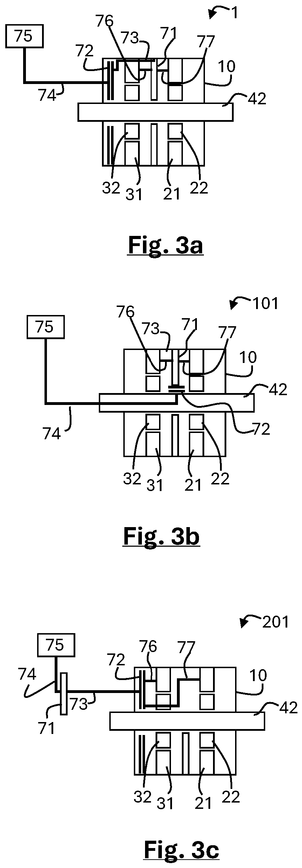

The drive unit 1 further comprises a control unit 71, as illustrated in fig. 2 and fig. 3a. The control unit 71 can e.g. be a board, e.g. a PCB. In the example shown in fig. 2 and fig. 3a, the control unit 71 is arranged inside the hub housing 10. The control unit 71 has an annular shape, and is arranged around the central shaft 42. The longitudinal axis 19 forms a center axis of the control unit 71.

The control unit 71 is configured to control the first and second motor 10, 20. In particular, the control unit 71 controls the first electromagnetic field generated by the first active body 21, and the second electromagnetic field generated by the second active body 31. The control unit 71 can achieve this by controlling how much electric current is provided to the coils of the active bodies 21, 31, and/or by controlling which coils are supplied with electric current. In the shown embodiment, the control unit 71 is electrically connected by connections 76, 77 to the respective active bodies 21, 31 for providing the electric current to said coils.

By controlling the first and second electromagnetic field, the control unit 71 can thus control the gear ratio and the assistance level between the input speed and the housing rotation speed (which equals the wheel rotation speed), and as such also the propelling speed of the vehicle.

The control unit 71 is physically connected and fixed to a control unit holder 13. The control unit holder 13 is in turn physically connected and fixed to the hub housing 10. The control unit holder 13 as such fixes the control unit 71 to the hub housing 10. The control unit 71 rotates along with the hub housing 10 at the housing rotation speed, while thermal energy is transferred from the control unit 71 to the outside air via the control unit holder 13 and the hub housing 10. Efficient cooling of the control unit 71 is achieved, which is advantageous since the electric and electronic components (e.g. the MOSFETs) of the control unit 71 may generate heat.

Furthermore, in the shown example, the control unit 71 may comprise an IMU sensor 701, schematically indicated in fig. 2. The IMU sensor 701 is arranged on control unit 71, which in turn is formed by an annular shaped board. Since the control unit 71 rotates at the housing rotation speed and thus wheel rotation speed, the IMU sensor 701 can be used to determine the wheel rotation speed. Advantageously, there is no need for additional electrical connections between the IMU sensor 701 and the control unit 71.

In the shown example the control unit 71 is arranged between the first and second motor 20, 30 when seen in longitudinal direction. This may be advantageous as it allows a short connection towards both motors 20, 30, while controlling both motors from a single control unit 71 with in particular a single board.

The control unit 71 is functionally connected to a battery 75 which is arranged outside of the hub housing 10. The battery 75 may e.g. be connected to the frame of the vehicle. In the shown example, the control unit 71 will rotate relative to the battery 75, which means that a rotating contact is required for transmitting the power.

In the shown example, the drive unit 1 comprises a rotating electrical connection 72, which in this case is embodied as a rotating contact with brushes, e.g. a slip ring. Other examples to implement the rotating electrical connection 72 include a contactless rotary transformer, a current transmitting bearing, or a current transmitting brush. A battery cable 74 is connected to a stationary side of the rotating electrical connection 72. The other end of the battery cable 74 is (directly or indirectly) connected to the battery 75. A control unit cable 73 is connected to a rotating side of the rotating electrical connection 72. The control unit cable 73 may be routed via the inside of the hub housing 10 towards the control unit 71.

Fig. 3b schematically illustrates a drive unit 201 in another embodiment. In this embodiment, the rotating electrical connection is arranged between the control unit 71 and the central shaft 42 in radial direction. The battery cable 74 extends through the central shaft 42 (or central axle 42). In this embodiment, the central shaft 42 does not rotate and thus stays stationary relative to the non-rotating component, e.g. frame of the vehicle (and the battery 75).

Fig. 3c schematically illustrates a drive unit 201 in another embodiment, wherein the control unit 71 is arranged outside of the hub housing 10. The control unit 71 can e.g. be connected to the frame of the vehicle, e.g. in the vicinity of the battery 75. In this case the control unit cable 73 is connected to the stationary side of the rotating electrical connection 72. The first active body 76 and the second active body 77 are directly connected to the rotating side of the rotating electrical connection 72 by connections 76, 77, respectively. In an alternative embodiment, it may be possible to provide a first rotating electrical connection for the first active body and a second rotating electrical connection for the second active body.

It will be understood that various variations on the examples shown in fig. 3a-3c are possible. For example, it may be possible to provide two separate boards, one for controlling the first motor 20 and one for controlling the second motor 30. For example, the control unit 71 can be arranged on another location in the hub housing 10, e.g. with one of the motors 20, 30 being arranged between the control unit 71 and the other motor 20, 30 when seen in longitudinal direction. For example, other routings of the cables 73, 74, 76, 77 are also possible. For example, it may also be possible that the drive unit only comprises a single motor.

Whereas fig. 3a-3b have been used to explain the power connection between the control unit 71 and the battery 75, the drive unit 10 may also comprise information connections. The control unit 71 may e.g. be configured to receive information from a user input, e.g. information relating to a desired (virtual) gear (or transmission ratio), information relating to a desired power assistance level. In addition, the control unit may receive information from one or more sensors arranged on the motors 20, 30, e.g. relating to a rotation speed of the respective active body 21, 31 or respective reactive body 22, 32.

The information connections may be embodied similarly as any of the examples explained of the power connections above. In addition, information connections could be achieved by a modulation of another electrical current, e.g. the electrical power transmission via the power connection. Also a radio frequency transmission or an optic transmission are possible to transmit the information between a rotating element and a non-rotating component.

In fig. 2 some bearings 81 are indicated with reference numeral 81; however, for the sake of clarity not all bearings are explicitly indicated and described herein. It will be understood that the drive unit 1 may comprise bearings 81 where appropriate to allow for the described rotations.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated from each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A drive unit for a vehicle, comprising:
• a hub housing configured to be arranged at a wheel of the vehicle,
• at least a first motor arranged in the hub housing, wherein the first motor comprises:
∘ a first active body configured to generate a first electromagnetic field, wherein the first electromagnetic field rotates relative to the first active body; and
∘ a first reactive body comprising electromagnetic components configured to cause an electromagnetic torque between the first active body and the first reactive body for generating a relative rotation between the first reactive body and the first active body, when subjected to the first electromagnetic field, said rotation being around a longitudinal axis of the motor;
wherein
• the first active body is arranged radially outward of the first reactive body,
• the first active body is fixed to the hub housing,
• the hub housing and the first active body are configured to rotate together around the longitudinal axis at a housing rotation speed when the first active body generates the first electromagnetic field.

2. The drive unit according to claim 1, wherein the first reactive body is configured to rotate around the longitudinal axis of the motor at a first rotation speed when being subjected to the first electromagnetic field, wherein the first rotation speed is different from the housing rotation speed in magnitude and/or direction.

3. The drive unit according to claim 1 or claim 2, wherein the drive unit is configured to rotate a wheel of the vehicle at a wheel rotation speed, wherein the drive unit further comprises a transmission arranged in the hub housing, wherein the transmission is configured to convert the rotation of at least the first reactive body into the rotation of the wheel, wherein the wheel rotation speed is different from the first rotation speed.

4. The drive unit according to any of the preceding claims, wherein the drive unit further comprises a second motor arranged in the hub housing, wherein the second motor comprises:
• a second active body configured to generate a second electromagnetic field, wherein the second electromagnetic field rotates relative to the second active body;
• a second reactive body comprising electromagnetic components configured to cause an electromagnetic torque between the second active body and the second reactive body for generating a relative rotation between the second reactive body and the second active body, when subjected to the second electromagnetic field, said rotation being around the longitudinal axis of the motor; and
wherein
• the second active body is arranged radially outward of the second reactive body,
• the second active body is fixed to the hub housing,
• the second active body is configured to rotate together with the hub housing and the first active body around the longitudinal axis at the housing rotation speed when the first active body generates the first electromagnetic field and/or the second active body generates the second electromagnetic field.

5. The drive unit according to any of the preceding claims, wherein the drive unit comprises an input body configured to rotate at an input speed, wherein the input body is configured to be rotated directly or via one or more transmissions by a human force input, and wherein the drive unit is configured to combine the torque of the input body and at least the torque of the first motor to propel the vehicle.

6. The drive unit according to claim 5, comprising a continuously variable transmission arranged in the hub housing having an adaptable gear ratio between the input speed and a wheel rotation speed.

7. The drive unit according to claim 6, wherein the continuously variable transmission comprises a differential system, wherein
• the differential system is functionally connected to the input body;
• the differential system is functionally connected to the first reactive body;
• the differential system is functionally connected to the hub housing;
wherein the differential system is configured such that a rotation speed ratio between the input body and the housing rotation speed is controllable by adapting the first relative rotation speed of the first reactive body.

8. The drive unit according to any of the preceding claims, further comprising at least a rotating electrical connection to transfer electrical power and/or information between
• the control unit and a power supply and/or supply outside of the hub housing, or
• the control unit and the first active body, and optionally the second active body.

9. The drive unit according to any of the preceding claims, further comprising a control unit arranged in the hub housing, wherein the control unit is configured to control at least the first motor, wherein the control unit is fixed to the hub housing and configured to rotate together with the hub housing and the first active body at the housing rotation speed.

10. The drive unit according to claim 9, further comprising at least one sensor arranged on the control unit for measuring the housing rotation speed, wherein the at least one sensor e.g. is an IMU sensor.

11. The drive unit according to any of the preceding claims, wherein the first and/or second reactive body comprise one or more permanent magnets, and wherein the first and/or second active body comprise one or more iron cores with coil wound around the respective iron core, wherein the coil is configured to generate the electromagnetic field when current is flowing through it.

12. The drive unit according to any of the preceding claims, further comprising a differential system wherein the first reactive body is functionally connected to the differential system, and optionally comprising a reduction system, wherein the second reactive body is functionally connected to one of the reduction systems.

13. The drive unit according to any of the preceding claims, wherein the vehicle is a bicycle comprising pedals and a crankshaft connected thereto, configured to receive a human force input.

14. A vehicle, e.g. a bicycle, comprising a drive unit according to any of the preceding claims, wherein the hub housing is arranged at one of the wheels of the vehicle.

15. A method for cooling at least a first motor of a drive unit for a vehicle, wherein the first motor is arranged in a hub housing arranged at a wheel of the vehicle, wherein the first motor comprises a first active body and a first reactive body, wherein the first active body is arranged radially outward of the first reactive body and is fixed to the hub housing;
wherein the method comprises the following steps:
• generating a first electromagnetic field with the first active body, wherein the first electromagnetic field rotates relative to the first active body, wherein the first electromagnetic field causes a relative rotation between the first reactive body and the first active body, said rotation being around a longitudinal axis of the motor;
• rotating the hub housing and the first active body together around the longitudinal axis at a housing rotation speed.
